# EUROPEAN PATENT SPECIFICATION

(11) **EP 2 807 651 B1**
(45) Date of publication and mention of the grant of the patent: **27.04.2016**
(21) Application number: 11863254.6
(22) Date of filing: 28.12.2011
(51) Int. Cl.: G21C 13/02, G21C 21/00, B21D 51/00, B21K 23/04, F16J 12/00, B21K 21/02, B21K 21/06, B21D 51/18, B21J 5/00

(54) **A METHOD FOR THE MANUFACTURE OF A VESSEL BOTTOM WITH A FLANGE**
VERFAHREN ZUR HERSTELLUNG EINES BEHÄLTERBODENS MIT EINEM FLANSCH
PROCÉDÉ POUR LA FABRICATION D'UN FOND DE RÉCIPIENT MUNI D'UN REBORD

(43) Date of publication of application: 03.12.2014
(73) Proprietor: Vítkovice Heavy Machinery A.S., 706 02 Ostrava-Vitkovice (CZ); Vysoká Skola Bánská - Technická Univerzita Ostrava, 708 33 Ostrava-Poruba (CZ)
(72) Inventor: PETRZELA, Jirí, CZ-736 01 Havírov- Zivotice (CZ); LÁSZLÓ, Vladimír, SK-04414 Cana (Kosice okolie) (SK); CECHEL, Tomás, CZ-735 06 Karviná Nové Mesto (CZ); GREGER, Miroslav, CZ-708 00 Ostrava Poruba (CZ)
(74) Representative: Plicka, Josef
(86) International application number: PCT/CZ2011/000124
(87) International publication number: WO 2013/097836

(56) References cited:
- WO-A1-2010/145551
- US-A- 2 050 339
- US-A- 4 696 177
- US-B1- 6 389 094

## Description

### Technical Field of the Invention

The present invention relates to a method for the manufacture of vessel bottoms, especially for nuclear power plants.

### Background Art of the Invention

The simplest and still most popular way of producing this type of a vessel bottom with a flange (flanged bottom) is the production of a separate smooth bottom and a separate ring / collar, which is then welded to the bottom.

The plain bottom without a flange is produced from a circular plate by pressing in a female die and male die, that have the shape and dimensions of the relevant bottom. The ring is produced by a classical way through a forging technology. Then are the two parts welded together around the whole perimeter.

Advantages of this procedure consist in the fact that it is a proven technology with lower demands on the weight of forging ingots and easier handling with the semi-product during the manufacture.

Drawback of this procedure is a time-consuming production of the smooth bottom and ring, apart from the fact that the material in the vicinity of welds is subject to various transformations such as phase transformation or change in the volume by the thermal expansion of the material during welding.

Due to these changes tensile stresses may occur in weld points and their vicinity causing cracks in the course of time. In these points a reduction in mechanical properties of materials and loss of creep resistance under load takes place.

This fact results in a reduced service life of the relevant equipment and risk of damage during operation.

There are technologies by which the smooth bottom itself is made by welding from two plates, which in addition to the above-mentioned drawbacks also places greater demands on the ongoing testing. This process of production is from the point of view of customers of parts for nuclear power plants on the limit of applicability. From the technological point of view the bottoms made by the above procedure can be considered obsolete.

Known is a technology by which a bottom with a flange is manufactured without an application of an additional flange welding. As an entry semi-product a disk is used having a greater thickness than the required bottom wall thickness.

The heated starting circular plate is inserted into the recess of the die and forged by the number of strokes by an upper form die in the form of a plate, while this die rotates gradually around the vertical axis.

The moulded material is gradually pushed out upwards until it reaches the edge of the die, when it can be packed to form a flange or the bottom wall thickness in the upper part can be increased so that the flange is produced by tooling.

The disadvantage is however a difficult handling with the wrought material, both at the beginning, while the centering of the starting circular plate in the die cavity is difficult to perform, resulting in reduced accuracy of the finished forging, and at the end of the forging operation while removing the finished forging from the cavity.

The disadvantage is a high initial weight of the semi-product, falling forge scales inwards the cavity of the die and inwards the cavity of the preliminary forging where they accumulate at the location of the future bottom dome and in such a way marks are formed.

But the biggest drawback is the need to secure the angular motion of the upper tool or die by means of a rotary table, which represents quite a challenging investment.

Known is also a similar procedure as described above, which uses the same technology of forming, but with mirroring tools.

This means that the male die is a stationary bottom tool the surface of which corresponds to the inner surface of the forged bottom, and the upper rotary tool is a rotary forming plate with a working surface, which corresponds to the shape of the forged bottom.

The working part of the upper tool can be formed also from two profiled plates assembled in a cross pattern.

The advantage as compared with the previous method is that there is no danger of pushing forge scales to the inner surface of the bottom during the forging operation, but even in this way the other disadvantages have not been resolved.

Another method for forming a vessel bottom in one or more double acting presses is known from document US 4,696,177.

The task of the invention in question is therefore to develop a method for the manufacture of a vessel bottom with a flange, free from the above-mentioned shortcomings of known prior art will be removed.

### Summary of the Invention

According to this invention the above-mentioned task was solved by developing the method for the manufacture of a vessel bottom with a flange, particularly for nuclear power reactors, which includes the following steps:
- After heating an ingot to the forming temperature, a preliminary forging in the shape of a circular plate with a height H and diameter 0 is produced by free forging on a forging press.
- After the second heating to the forming temperature the preliminary forging is placed on the work bench of the lower swage,
- The first male die is pushed concentrically into the forging to a depth necessary for the formation of a flattened segment.
- The flattened segment is rotated by 180° and after the location of the machine tool a bellows is created by mechanical machining, which has a recess in the centre and a recess having a radius R around the perimeter of the convex region,
- After heating, the bellows is placed on a pre-prepared set of tools for pressing with its convex part upwards on a forming ring,
- The main male die is pushed concentrically into the bellows for pressing the bottom by means of reverse drawing, the bottom being equipped with an external flange.

The height H of the circular plate is preferably a 1.1 to 2.5 multiple of the height A of the flange.

The depth k is preferably a 1.1 to 3 multiple of the wall thickness of the bottom pressed piece.

The radius R is preferably a 0.3 to 1 multiple of the height of the flange.

The size B is preferably a 0.5 to 1.5 multiple of the depth k.

The first male die has preferably the shape of a truncated cone with rounded edges with a radius R₀.

The main male die has preferably in cross-section a round shape with a radius R₁.

The main male die may have preferably in cross-section the shape of an ellipse.

The machine tool is preferably a carousel machining lathe.

The assembly of tools for pressing includes preferably a forming ring and an auxiliary ring.

The assembly of tools for pressing may advantageously include a die corresponding to the dimensions of the forged bottom.

The new technology of the present invention provides several advantages as compared with existing methods of production of flanged bottoms, particularly an easy and fast production, wide dimensional possibilities of the design of bottoms and material savings of more than 20%.

The advantage of this modification is further an increase in production capacity of existing production facilities (hydraulic presses), which enables to produce flanged bottoms with larger dimensional parameters. The newly invented method of manufacturing the flanged bottom makes possible the production of these bottoms with an outer diameter of the flange equal to 0.95 times the distance between the columns of the press.

Another advantage is the method for the manufacture of the flanged bottom starting from one part without the necessity to attach the flange in any way to the sole bottom. As a starting semi-product for the production of the flanged bottom flange a circular plate is used which is partially modified through forming' and partially through machining to a shape that allows the manufacture of this bottom as an all-metal bottom with a flange.

Another advantage consists in the saving of the used forming tools (tools are simple and there is no need of using grippers).

### Brief Description of the Drawings

The method for the manufacture of a vessel bottom with a flange according to the present invention will be further explained on the example of its performance, the description will be given with regard to the enclosed drawings, where
Fig. 1 shows a view of the preliminary forging in the shape of a block;
Fig. 2 shows a view in vertical axial section at the assembly in the production of the preliminary forging after inserting the first male die;
Fig. 3 shows the shape of the bellows as the starting semi-product for pressing, after a partial deformation and subsequent machining;
Fig. 4 shows a view in a vertical axial section at the assembly before extruding the flanged bottom, and

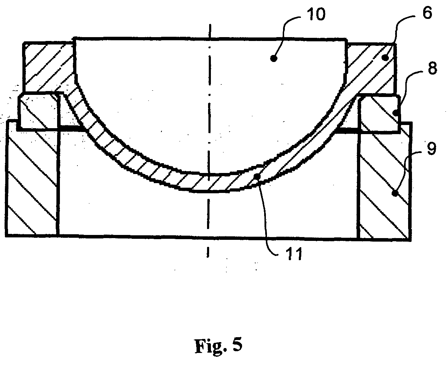

Fig. 5 shows a view in a vertical axial section after the final pressing of the flanged bottom.

### Detailed Description of the Preferred Embodiments

According to this invention has thus been developed a method for the manufacture of the vessel bottom 11 with a flange 6, the exemplary embodiment of which is shown in the above drawings.

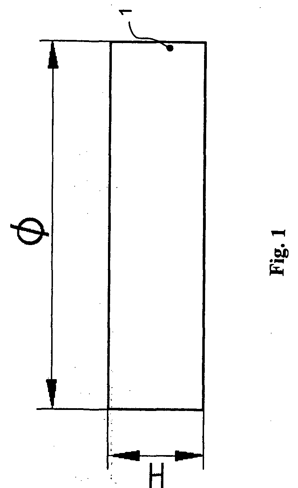

The subject matter is the production of the preliminary forging 1 by means of a free forging in the shape of a circular plate with a height H (see Fig. 1), which is governed by the desired height A of the flange 6, where H = (1.1 to 2.5) of A.

In the axis of the circular plate the first male die is pushed in the vertical direction to the depth k, where k is 1.1 to 3 multiple of the required wall thickness of the bottom 11.

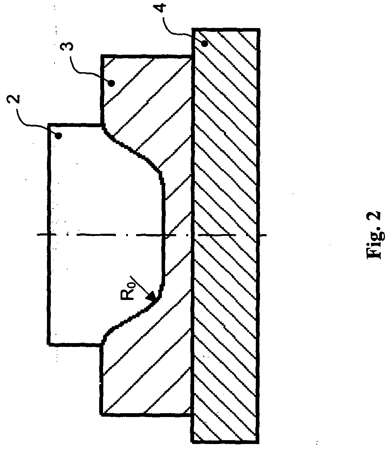

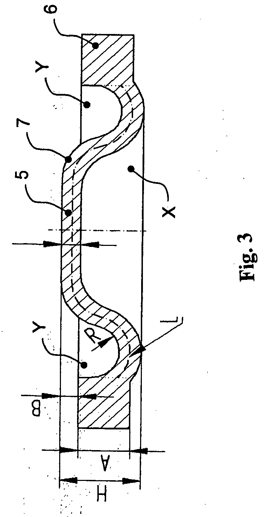

Subsequently, this flattened segment 3 is rotated by 180° and placed on the machine tool, such as a carousel machining lathe, and then mechanically machined into the shape of the bellows 7, which has in the cross section a double sigmoid curvation with a radius R = (0.3 to 1) of A and a convex central part 5 (see Fig. 3). It is true that A is 1.5 or more multiple of the thickness k of the central part 5 and B = (0.5 to 1.5) of k. The flange is machined with a smith allowance (see Fig. 2 and Fig. 3).

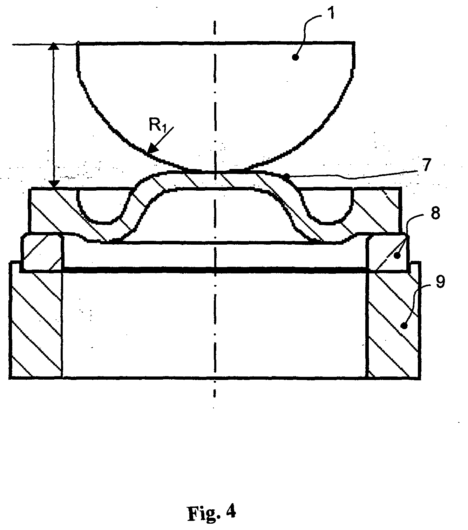

The semi-product in the shape of the bellows 7 is then placed with its convex part 5 upwards on the forming ring 8 which forms a part of the pre-prepared assembly of the forming ring 8 and auxiliary ring 9 (see Fig. 4).

Alternatively, instead of the forming and auxiliary ring a die can be used, the inner surface of which corresponds to the size of the bottom forging.

By virtue of a pressure of the main die 10, the shape of which corresponds to the desired shape of the inner shape of the bottom 11, the pressing of the bottom 11 is achieved through a reverse drawing.

The principle of the method for the manufacture of the vessel bottom 11 with a flange 6 consists in that after the heating an ingot on the forming temperature a preliminary forging 1 in the shape of a circular plate is made by free forging on the forging press. The thickness of the circular plate is given by the thickness of the outer flange 6.

After heating the ingot on the forming temperature the preliminary forging in the shape of a circular plate is placed on the working plate 4 of the lower swage and by pressure of the first die 2 in the vertical direction to the depth 4 the flattened segment 3 is obtained.

Subsequently, this flattened segment 3 is mechanically machined into the shape of the preliminary forging of the bellows 7. The edge of the semi-product of the bellows 7 forms after processing by its shape and dimensions already the finished flange 6 of the forged bottom 11. This flange 6 is not longer subject to the bottom 11 pressing.

After the second heating to the forming temperature the bellows 7 is placed at the centre of the forming ring 8 which forms a part of the pre-preselected assembly of the forming ring 8 and auxiliary ring 9, the forming ring 8 being placed on the auxiliary ring 9.

By the pressure effect of the main male die 10 to a depth the central part of the bellows 7 is pressed, and thereby the vessel forged bottom 11 with the flange 6 is obtained.

### Industrial Applicability

A method for the manufacture of flanged vessel bottoms according to the invention can be mainly used for manufacturing the flanged bottoms used for example in the nuclear power in the production of nuclear reactor vessels, or in the production of other vessels and facilities where the use of a bottom with a flange is required.

### List of reference characters

- 1: - preliminary forging
- 2: - first male die
- 3: - flattened segment
- 4: - working plate 4 of a lower swage
- 5: - convex part 5 of the bellows 7
- 6: - outer flange
- 7: - bellows
- 8: - forming ring
- 9: - auxiliary ring
- 10: - main male die
- 11: - bottom 11 of a vessel with a flange 6

- A: - the height of the flange 6
- B: - overlap B of the convex part 5 of the bellows 7 towards the outer flange 6
- H: - the height H of the preliminary forging 1
- L: - average length L of the convex part of the bellows 7 and bottom 11 of the vessel
- R: - radius
- R₀: - radius
- R₁: - radius
- X: - recess
- Y: - recess

- h: - depth
- k: - depth

- ∅: - diameter ∅ of the preliminary forging 1

## Claims

1. A method for the manufacture of a vessel bottom with a flange, especially for nuclear reactors in nuclear power plants, comprising the following steps:
- after heating an ingot to a forming temperature a preliminary forging (1) in shape of a circular plate having the height (H) and diameter (Ø) is made by free forging on a forging press,
- after second heating to a forming temperature the preliminary forging (1) is placed on a working plate (4) of a lower swage,
- a first male die (2) is pushed concentrically into the forging (1) to a depth necessary for the formation of a flattened segment (3),
- the flattened segment (3) is rotated by 180° and after its location on a machine tool a bellows (7) is formed by mechanical machining,
which bellows (7) has in cross section a double sigmoid curvation with a first radius (R), forming
- a convex central part (5) with a recess (X), and
- a recess (Y) having the first radius (R) around the perimeter of the convex central part(5),
- after heating the bellows (7) is placed on a pre-prepared set of tools for the pressing with the convex part (5) upwards on a forming ring (8),
- the main male die (10) is pushed concentric into the bellows (7) for pressing the bottom (11) by means of a reverse drawing, the bottom (11) being equipped with an external flange (6).

2. The method according to claim 1, **characterized in that** the height (H) of the circular plate is a 1,1 to 2,5 multiple of the height (A) of the flange (6).

3. The method according to claims 1 and 2, **characterized in that** the depth (k) is a 1,1 to 3 multiple of the wall thickness of the bottom pressed piece (11).

4. The method according to claims 1 to 3, **characterized in that** the first radius (R) is a 0, 3 to 1 multiple of the height (A) of the flange (6).

5. The method according to claims 1 to 4, **characterized in that** the first male die (2) has the shape of a truncated cone with rounded edges with a second radius (R₀).

6. The method according to claims 1 to 5, **characterised in that** the main male die (10) has in cross-section a round shape with a third radius (R₁).

7. The method according to claims 1 to 6, **characterized in that** the main male die (10) has in cross-section the shape of an ellipse.

8. The method according to claims 1 to 7, **characterized in that** the machine tool is a carousel machining lathe.

9. The method according to claims 1 to 8, **characterized in that** the set of tools for pressing includes a forming ring (8) and auxiliary forming ring (9).

10. The method according to claims 1 to 9, **characterized in that** the set of tools for pressing includes a die corresponding to the dimensions of the forged bottom (11).

## Patentansprüche

1. Verfahren zur Herstellung eines Behälterbodens mit einem Flansch, insbesondere für einen Kernreaktor in einem Kernkraftwerk, umfassend die folgenden Schritte:
- nach einer Aufwärmung eines Ingots bis zur Verformungstemperatur wird ein Vorschmiedeteil (1) in Form von einer Kreisplatte mit einer Höhe (H) und einem Durchmesser (0) mittels eines Freiformschmiedens in einer Schmiedepresse hergestellt,
- nach einer zweiten Aufwärmung bis zur Verformungstemperatur wird das Vorschmiedeteil (1) auf einer Arbeitsplatte (4) eines Untergesenks platziert,
- ein erster Pressstempel (2) wird in das Vorschmiedeteil (1) konzentrisch bis zur für das Abformen eines abgeflachten Segments (3) notwendigen Tiefe eingepresst,
- das abgeflachte Segment (3) wird um 180° gedreht und nach seinem Platzieren an einer Werkzeugmaschine mittels einer mechanischen Bearbeitung ein Balg (7) geformt wird,
welcher Balg (7) im Querschnitt eine doppelte S-Krümmung mit einem ersten Radius (R) aufweist,
- die einen konvexen zentralen Abschnitt (5) mit einer Vertiefung (X) und
- eine Vertiefung (Y) mit dem ersten Radius (R) rund den Umfang des konvexen zentralen Abschnitts (5) herum ausbildet,
- nach einer Aufwärmung wird der Balg (7) in einen vorbereiteten Werkzeugsatz für das Pressen mit dem nach oben orientierten konvexen Abschnitt (5) auf einem Formring (8) platziert,
- ein Hauptpressstempel (10) wird konzentrisch in den Balg (7) für das Pressen des Bodens (11) mittels eines Stülpziehens eingepresst, wobei der Boden (11) mit einem externen Flansch (6) versehen wird.

2. Verfahren nach Anspruch 1, **dadurch gekennzeichnet, dass** die Höhe (H) der Kreisplatte eine 1,1 bis 2,5-fache der Höhe (A) des Flansches (6) ist.

3. Verfahren nach den Ansprüchen 1 und 2, **dadurch gekennzeichnet, dass** die Tiefe (k) eine 1,1 bis 3-fache der Wandstärke des gepressten Bodensabschnittes (11) ist.

4. Verfahren nach den Ansprüchen 1 bis 3, **dadurch gekennzeichnet, dass** der erste Radius (R) eine 0,3 bis 1-fache der Höhe (A) des Flansches (6) ist.

5. Verfahren nach den Ansprüchen 1 bis 4, **dadurch gekennzeichnet, dass** der erste Pressstempel (2) die Form eines Kegelstumpfes mit abgerundeten Kanten mit dem zweiten Radius (R₀) aufweist.

6. Verfahren nach den Ansprüchen 1 bis 5, **dadurch gekennzeichnet, dass** der Hauptpressstempel (10) im Querschnitt eine abgerundete Form mit dem dritten Radius (R₁) aufweist.

7. Verfahren nach den Ansprüchen 1 bis 6, **dadurch gekennzeichnet, dass** der Hauptpressstempel (10) im Querschnitt die Form einer Ellipse aufweist.

8. Verfahren nach den Ansprüchen 1 bis 7, **dadurch gekennzeichnet, dass** die Werkzeugmaschine eine spannabhebende Karussel-Drehmaschine ist.

9. Verfahren nach den Ansprüchen 1 bis 8, **dadurch gekennzeichnet, dass** der Werkzeugsatz zum Pressen einen Formring (8) und einen zusätzlichen Formring (9) aufweist.

10. Verfahren nach den Ansprüchen 1 bis 9, **dadurch gekennzeichnet, dass** der Werkzeugsatz zum Pressen ein den Dimensionen des geschmiedeten Bodens (11) entsprechendes Gesenk aufweist.

## Revendications

1. Une méthode de fabrication d'un fond de cuve destinée particulièrement pour des réacteurs nucléaires dans une centrale électronucléaire; cette méthode consistant en étapes suivantes:
- ayant chauffé un lingot à la température de formation on réalise un forgeage préliminaire (1) en forme d'une plaque circulaire d'une hauteur (H) et d'un diamètre (0) par forgeage libre dans une presse à forger,
- après un autre chauffage à la température de formation un forgeage préliminaire (1) est placé sur une plaque de travail (4) d'enclume inférieure,
- un premier poinçon (2) est poussé d'une façon concentrique dans le forgeage (1) jusqu'au profondeur nécessaire pour la formation d'un segment aplati (3),
- ledit segment aplati (3) mis en rotation de 180° est ensuite placé sur une machine-outil et un soufflet (7) est formé par usinage mécanique,
- ce soufflet (7) possède en section transversale une double courbure en forme d'un S avec un premier rayon (R) lequel forme
- une partie centrale convexe (5) avec une retraite (X) et
- une retraite (Y) avec un premier rayon (R) autour d'un périmètre de la partie centrale convexe (5),
- après chauffage le soufflet (7) est placé sur un jeu d'outils préparé d'avance pour le pressage avec la partie convexe (5) en haut sur la bague de formation (8),
- le poinçon principal (10) est poussé de façon concentrique dans le soufflet (7) pour presser le fond (11) par des moyens de traction réversible, le fond (11) étant pourvu d'une bride externe (6).

2. La méthode selon la revendication 1, **caractérisée en ce que** la hauteur (H) de la plaque circulaire est 1,1 à 2,5 multiples de l'hauteur (A) de la bride (6).

3. La méthode selon les revendications 1 et **2, caractérisée en ce que** la profondeur (k) est 1,1 à 3 multiples de largeur de la paroi de la pièce pressée (11) du fond.

4. Une méthode selon les revendications 1 à 3, **caractérisée en ce que** le premier rayon (R) est 0,3 à 3 multiples de la hauteur (A) de la bride (6).

5. La méthode selon les revendications 1 à 4, **caractérisée en ce que** le premier poinçon (2) a la forme d'un cône tronqué avec des arêtes arrondies par un rayon secondaire (R₀).

6. La méthode selon les revendications 1 à 5, **caractérisée en ce que** le poinçon principal (10) possède en section transversale un contour rond avec un troisième rayon (R₁).

7. La méthode selon les revendications 1 à 6, **caractérisée en ce que** le poinçon principal (10) possède en section transversale un contour d'une ellipse.

8. La méthode selon les revendications 1 à 7, **caractérisée en ce que** la machine-outil est un tour à usinage carrousel.

9. La méthode selon les revendications 1 à 8, **caractérisée en ce que** le jeu d'outils pour presser comprend une bague de formation (8) et une bague de formation auxiliaire (9).

10. La méthode selon les revendications 1 à 9, **caractérisée en ce que** le jeu d'outils pour presser comprend un poinçon correspondant aux dimensions du fond forgé.
